# EUROPÄISCHE PATENTSCHRIFT

(11) **EP 2 577 104 B1**
(45) Veröffentlichungstag und Bekanntmachung des Hinweises auf die Patenterteilung: **12.06.2019**
(21) Anmeldenummer: 10788306.8
(22) Anmeldetag: 03.12.2010
(51) Int. Cl.: F16H 45/02, F16F 15/12, F16F 15/131, F16F 15/14

(54) **DREHSCHWINGUNGSDÄMPFUNGSANORDNUNG**
HYDRODYNAMIC COUPLING DEVICE
APPAREIL HYDRODYNAMIQUE DE COUPLAGE

(30) Priorität: 25.05.2010 DE 102010029255
(43) Veröffentlichungstag der Anmeldung: 10.04.2013
(73) Patentinhaber: ZF Friedrichshafen AG, 88046 Friedrichshafen (DE)
(72) Erfinder: DOEGEL, Thomas, 97688 Bad Kissingen (DE); HOFFELNER, Ingrid, 97478 Knetzgau (DE); KUEHNER, Michael, 74078 Heilbronn (DE)
(86) Internationale Anmeldenummer: PCT/EP2010/068823
(87) Internationale Veröffentlichungsnummer: WO 2011/147488

(56) Entgegenhaltungen:
- DE-A1- 19 826 351
- DE-A1- 19 835 758
- DE-A1-102008 034 557
- DE-A1-102008 057 648
- GB-A- 2 346 194
- US-A1- 2002 033 310
- US-A1- 2009 125 202
- US-B1- 6 231 472

## Beschreibung

Die vorliegende Erfindung betrifft eine Drehschwingungsdämpfungsanordnung, wie sie beispielsweise im Antriebsstrang eines Fahrzeugs eingesetzt werden kann.

Vor allem bei mit Brennkraftmaschinen aufgebauten Antriebssträngen kann bedingt dadurch, dass in Brennkraftmaschinen periodisch Zündungen auftreten und die dabei freigesetzte Energie in eine Drehbewegung der Kurbelwelle umgesetzt wird, grundsätzlich kein konstantes Drehmoment in einen Antriebsstrang eingeleitet werden. Sowohl das von der Kurbelwelle abgegebene Drehmoment, als auch deren Drehzahl unterliegt Schwankungen bzw. Schwingungen, allgemein Drehungleichförmigkeiten. Da derartige Drehungleichförmigkeiten im Fahrbetrieb spürbar sein können, besteht allgemein die Zielsetzung, diese so weit als möglich zu eliminieren.

Beispielsweise ist es bekannt, durch den Einsatz von Kraft- bzw. Energiespeichern, also beispielsweise Federn oder sich bewegende Massen oder Kombinationen daraus, die bei derartigen Drehungleichförmigkeiten auftretenden Energien vorübergehend zu speichern und sie dann so in den Antriebsstrang weiterzugeben, dass ein geglätteter Drehzahl- bzw. Drehmomentenverlauf erreicht werden kann. Als drehzahladaptive Tilger bekannte Massenpendel setzen die im Fahrzustand auftretenden Drehungleichförmigkeiten in oszillierende Auslenkungen von Schwingungsmassen um, wobei die Auslenkung entgegen der Fliehkraft erfolgt und durch Vorgabe der Auslenkungsbahn bzw. auch der auszulenkenden Massen eine Abstimmung auf bestimmte Anregungsdrehzahlen bzw. Anregungsfrequenzen erreicht werden kann. Derartige Tilger können selbstverständlich mit durch Einsatz von Federn oder dergleichen schwingenden Massensystemen kombiniert werden.

Auf Grund der im modernen Fahrzeugbau immer beengter werdenden Platzverhältnisse steht auch für die zur Schwingungsdämpfung eingesetzten Systeme weniger Bauraum mit entsprechenden Einbußen in der Entkopplungsgüte, also der Verringerung der auftretenden Drehungleichförmigkeiten, zur Verfügung.

Beispielsweise betrifft die GB 2 346 194 A eine Vorrichtung zur Dämpfung eines Drehmoments, die ein Planetengetriebe umfasst. In den Planetenträger des Planetengetriebes wird das Drehmoment über ein Federpaket eingeleitet.

Es ist die Aufgabe der vorliegenden Erfindung, eine Drehschwingungsdämpfungsanordnung, insbesondere für einen Antriebsstrang mit einem Automatikgetriebe, bereitzustellen, welche eine verbesserte Verringerung von in einen Antriebsstrang eingeleiteten Drehungleichförmigkeiten erreicht.

Erfindungsgemäß wird diese Aufgabe gelöst durch eine Drehschwingungsdämpfungsanordnung, gemäß dem unabhängigen Anspruch 1.

Bei der erfindungsgemäßen Drehschwingungsdämpfungsanordnung wird durch Einsatz der Phasenschieberanordnung dafür gesorgt, dass zunächst durch Aufteilung und dann wieder Zusammenführung des übertragenen Drehmoments durch die dabei eingeführte Phasenverschiebung eine destruktive Überlagerung von Schwingungsanteilen in dem zu übertragenden Drehmoment auftritt. Im Idealfalle findet zumindest in einem besonders kritischen Frequenzbereich eine nahezu vollständige Eliminierung der Drehungleichförmigkeiten statt.

Um diese Phasenverschiebung bei baulich einfacher Weise effizient erreichen zu können, wird vorgeschlagen, dass die Phasenschieberanordnung ein Schwingungssystem mit einer Primärseite und einer gegen die Wirkung einer Federanordnung bezüglich der Primärseite um die Drehachse drehbaren Sekundärseite umfasst.

Die Phasenschieberanordnung ist somit im Wesentlichen nach dem Funktionsprinzip eines Zweimassenschwingers aufgebaut, bei welchem zwei gegen die Wirkung der Federanordnung bezüglich einander schwingende Massen, also im Wesentlichen die Primärseite und die Sekundärseite, durch Auswahl der Federsteifigkeit einerseits und der Massenverhältnisse bzw. der Massenträgheit an der Primärseite und der Sekundärseite andererseits mit einem gewünschten Schwingungsverhalten bereitgestellt werden. Charakteristisch ist, dass ein derartiges Schwingungssystem eine Resonanzfrequenz aufweist. Im Frequenzbereich unter der Resonanzfrequenz schwingt ein derartiges Schwingungssystem unterkritisch, d.h. Anregung und Reaktion des Systems treten im Wesentlichen gleichzeitig auf. Mit Überschreiten der Resonanzfrequenz tritt ein Phasensprung auf, so dass im Wesentlichen Anregung und Reaktion des Systems zueinander phasenverschoben auftreten, das System also überkritisch arbeitet. Diesen Phasensprung, der im Idealfalle bei einem Maximalwert von 180° liegt, nutzt die vorliegende Erfindung, um durch Überlagerung des so phasenverschobenen Drehmomentenschwingungsanteils mit dem nicht phasenverschobenen Drehmomentenschwingungsanteil die gewünschte Minderung der Drehungleichförmigkeiten zu erreichen.

Um ein weiter verbessertes Schwingungsdämpfungsverhalten im Drehmomentübertragungsweg zu dem Abtriebsorgan erreichen zu können, wird vorgeschlagen, dass der Ausgangsbereich ein weiteres Schwingungssystem mit einer Primärseite und einer gegen die Wirkung einer Federanordnung bezüglich der Primärseite drehbaren Sekundärseite umfasst.

Gemäß einem besonders vorteilhaften Aspekt wird vorgeschlagen, dass eine um eine Drehachse drehbare, mit Fluid gefüllte oder füllbare und wenigstens die Kopplungsanordnung umschließende Gehäuseanordnung vorgesehen ist. Durch das Integrieren wenigstens der Kopplungsanordnung in eine mit Fluid gefüllte oder füllbare Gehäuseanordnung wird die Möglichkeit geschaffen, durch das Fluid und den durch dieses eingeführten Schmiereffekt, insbesondere dann, wenn das Fluid Öl ist, den Verschleiß insbesondere im Bereich der Kopplungsanordnung zu mindern. Auch kann ein Einfluss auf das Dämpfungsverhalten genommen werden, da sich bewegende Komponenten entgegen dem Widerstand des Fluids zu bewegen sind und dabei Energie dissipiert wird.

Dabei kann weiter vorgesehen sein, dass die Gehäuseanordnung wenigstens einen Teil der Phasenschieberanordnung umschließt.

Bei einer alternativen Variante wird vorgeschlagen, dass wenigstens ein Teil Phasenschieberanordnung außerhalb der Gehäuseanordnung angeordnet ist.

Bei einem besonders vorteilhaften Erfindungsaspekt wird vorgeschlagen, dass der Drehmomentenfluss von der Gehäuseanordnung oder/und dem Eingangsbereich zu einem Abtriebsorgan nicht unterbrechbar ist. Dies bedeutet, dass, anders als beispielsweise bei einem hydrodynamischen Drehmomentwandler, bei welchem durch die Überbrückungskupplung der Drehmomentenfluss wahlweise hergestellt und unterbrochen werden kann, im Sinne der vorliegenden Erfindung die Drehschwingungsdämpfungsanordnung tatsächlich auch nur als solche im Drehmomentenfluss wirksam sein kann, aber nicht dazu genutzt werden kann, um den folgenden Bereich eines Antriebsstrangs abzukoppeln. Tatsächlich besteht bei dem erfindungsgemäßen Aufbau zwischen der Gehäuseanordnung und dem Abtriebsorgan eine permanente nicht lösbare, gleichwohl jedoch zur Drehschwingungsdämpfung beitragende Verbindung.

Das Abtriebsorgan kann beispielsweise eine mit einer Abtriebswelle, vorzugsweise Getriebeeingangswelle zur gemeinsamen Drehung um die Drehachse gekoppelte oder koppelbare Abtriebsnabe umfassen.

Die Versorgung der Gehäuseanordnung mit Fluid kann beispielsweise dadurch sichergestellt werden, dass die Gehäuseanordnung eine Antriebsformation zum Antreiben einer Fluidpumpe zum Fördern von Fluid in die Gehäuseanordnung umfasst. Immer dann, wenn die Gehäuseanordnung zur Drehung um die Drehachse angetrieben wird, kann auf diese Art und Weise auch eine Fluidpumpe aktiviert werden und somit sichergestellt werden, dass im Betrieb die Gehäuseanordnung ausreichend mit Fluid gefüllt ist.

Bei der baulich sehr einfachen, kompakt zu realisierenden Erfindung, die Kopplungsanordnung umfasst eine Planetengetriebeanordnung. Die Planetengetriebeanordnung umfasst einen an den zweiten Drehmomentübertragungsweg angebundenen Planetenradträger mit einer Mehrzahl von daran drehbar getragenen Planetenrädern umfasst. Es sei hier darauf hingewiesen, dass die Planetenräder als im Wesentlichen kreisrunde, also mit voll umlaufender Verzahnung ausgebildete Räder ausgebildet sein können, oder alternativ aber auch als Segmenträder ausgebildet sein können.

Erfindungsgemäß, um die Planetengetriebeanordnung bzw. deren Planetenräder zur Zusammenleitung der über die beiden Drehmomentübertragungswege geleiteten Drehmomente bzw. Drehmomentanteile in einfacher Weise zu nutzen die Planetengetriebeanordnung umfasst eine an den ersten Drehmomentübertragungsweg angebundene erste Koppelradanordnung in Kämmeingriff mit den Planetenrädern und eine an den Ausgangsbereich angebundene zweite Koppelradanordnung in Kämmeingriff mit den Planetenrädern.

Hierbei kann beispielsweise vorgesehen sein, dass die erste Koppelradanordnung in Verbindung mit den Planetenrädern und die zweite Koppelradanordnung in Verbindung mit den Planetenrädern zueinander gleiche Übersetzungsverhältnisse bereitstellen. Durch das Bereitstellen im Wesentlichen gleicher Übersetzungsverhältnisse kann erreicht werden, dass die über die beiden Drehmomentübertragungswege geleiteten Drehmomentenanteile des gesamt zu übertragenden Drehmoments im Wesentlichen gleich groß sind.

Eine Beeinflussung der über die beiden Drehmomentübertragungswege zu übertragenden Drehmomente bzw. Drehmomentanteile in dem Sinne, dass diese nicht gleich zueinander sind, kann dadurch erfolgen, dass die erste Koppelradanordnung in Verbindung mit den Planetenrädern und die zweite Koppelradanordnung in Verbindung mit den Planetenrädern zueinander unterschiedliche Übersetzungsverhältnisse bereitstellen.

Erfindungsgemäß, können die erste Koppelradanordnung und die zweite Koppelradanordnung jeweils als Hohlradanordnung ausgebildet sein, also mit den Planetenrädern in deren radial äußeren Bereich zusammenwirken oder können die erste Koppelradanordnung und die zweite Koppelradanordnung jeweils eine Sonnenradanordnung umfassen.

Zur weiteren Beeinflussung des Schwingungsdämpfungsverhaltens kann vorgesehen sein, dass das Schwingungssystem wenigstens zwei zueinander seriell angeordnete Schwingungsdämpfer jeweils mit einer Primärseite und einer bezüglich dieser drehbaren Sekundärseite umfasst. Alternativ oder zusätzlich kann vorgesehen sein, dass das Schwingungssystem wenigstens zwei zueinander parallel wirksame Schwingungsdämpfer jeweils mit einer Primärseite und einer bezüglich dieser drehbaren Sekundärseite umfasst.

Wenn das Schwingungssystem eine drehzahladaptive Schwingungsdämpfungsanordnung mit wenigstens einer in Umfangsrichtung aus einer Grundlage auslenkbaren und dabei ihren Abstand zur Drehachse verändernde Auslenkungsmasse umfasst, wird es weiter möglich, das Schwingungsdämpfungsverhalten an spezielle Anregungsfrequenzen bzw. Ordnungen derselben anzupassen.

Bei einer alternativen Ausgestaltungsvariante kann dies dadurch erreicht werden, dass das Schwingungssystem eine Festfrequenz-Schwingungsdämpfungsanordnung mit wenigstens einer gegen die Wirkung einer Rückstellfederanordnung auslenkbaren Schwingungsmasse umfasst.

Weiter kann das Schwingungsdämpfungsverhalten dadurch vorteilhaft beeinflusst werden, dass dem Schwingungssystem eine einer Relativdrehung zwischen Primärseite und Sekundärseite desselben entgegenwirkende Reibungsdämpfungsanodnung zugeordnet ist.

Die vorliegende Erfindung betrifft ferner einen Antriebsstrang für ein Fahrzeug, umfassend ein Automatikgetriebe mit einer Getriebeeingangswelle und einer getriebeinternen Drehmomentenflussunterbrechungsanordnung zur wahlweisen Unterbrechung der Drehmomentübertragungsverbindung zwischen der Getriebeeingangswelle und einer Getriebeausgangswelle, ferner umfassend eine erfindungsgemäße Drehschwingungsdämpfungsanordnung, wobei die Ausgangsseite mit der Getriebeeingangswelle zur gemeinsamen Drehung gekoppelt ist.

Die vorliegende Erfindung wird nachfolgend mit Bezug auf die beiliegenden Figuren detailliert beschrieben. Es zeigt:
- Fig. 1: eine Längsschnittdarstellung eines Automatikgetriebes;
- Fig. 2: eine prinzipartige Teil-Längsschnittansicht einer Drehschwingungsdämpfungsanordnung;
- Fig. 3: eine der Fig. 2 entsprechende Darstellung einer alternativen Ausgestaltungsart;
- Fig. 4: eine der Fig. 2 entsprechende Darstellung einer alternativen Ausgestaltungsart;
- Fig. 5: eine der Fig. 2 entsprechende Darstellung einer alternativen Ausgestaltungsart;
- Fig. 6: eine Teil-Längsschnittdarstellung einer dem Aufbauprinzip der Fig. 5 entsprechenden Drehschwingungsdämpfungsanordnung;
- Fig. 7: eine der Fig. 2 entsprechende Darstellung einer alternativen Ausgestaltungsart;
- Fig. 8: eine der Fig. 2 entsprechende Darstellung einer alternativen Ausgestaltungsart;
- Fig. 9: eine der Fig. 2 entsprechende Darstellung einer alternativen Ausgestaltungsart;
- Fig. 10: eine der Fig. 2 entsprechende Darstellung einer alternativen Ausgestaltungsart;
- Fig. 11: eine Teil-Längsschnittdarstellung einer dem Aufbauprinzip der Fig. 10 entsprechenden Drehschwingungsdämpfungsanordnung;
- Fig. 12: eine der Fig. 2 entsprechende Darstellung einer alternativen Ausgestaltungsart.

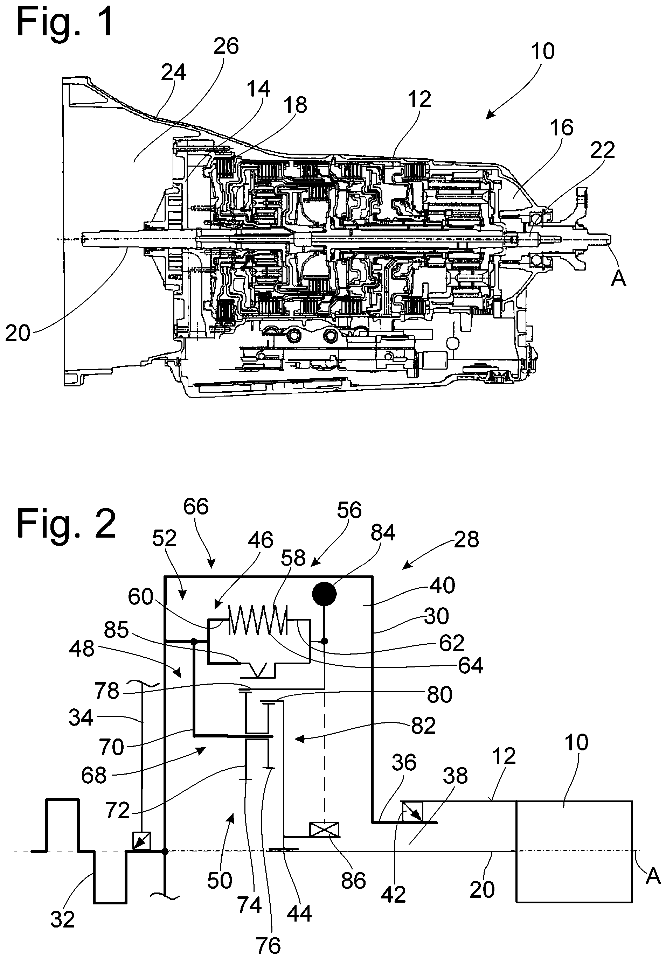

In Fig. 1 ist ein für den Antriebsstrang eines Fahrzeugs vorgesehenes Automatikgetriebe allgemein mit 10 bezeichnet. Das Getriebe 10 umfasst ein Getriebegehäuse 12 mit einem durch eine Zwischenplatte 14 im Wesentlichen fluiddicht gekapselten Nassraum 16. Im Nassraum 16 sind die verschiedenen zur Änderung des Drehzahlübersetzungsverhältnisses vorgesehenen Getriebekomponenten, also Planetengetriebe, Kupplungsanordnungen, Bremsanordnungen und dergleichen, vorgesehen. Insbesondere umfassen diese Komponenten eine in dem Nassraum 16 angeordnete Bremsanordnung 18, die dazu genutzt werden kann, den Drehmomentenfluss von einer druch die Zwischenplatte 14 fluiddicht hindurchgeführten Getriebeeingangswelle 20 zu einer Getriebeausgangswelle 22 zu unterbrechen. Diese Bremsanordnung 18 ist also als getriebeinternes Anfahrelement wirksam, durch welches dafür gesorgt werden kann, dass bei laufendem Antriebsaggregat, also beispielsweise Brennkraftmaschine, und stehendem Fahrzeug die Getriebeausgangswelle 22 stillstehen kann, während die Getriebeeingangswelle 20 sich mit einer Antriebswelle, also beispielsweise Kurbelwelle, drehen kann.

Es ist bei einer derartigen Ausgestaltungsart eines Automatikgetriebes 10 dann nicht erforderlich, ein weiteres Anfahrelement, also zur wahlweisen Herstellung oder Unterbrechung des Drehmomentenflusses geeignetes System, wie z. B. hydrodynamischer Drehmomentwandler oder sonstige Kupplung, bereitzustellen. Dies wiederum bedeutet, dass der von einer Getriebeglocke 24 des Getriebegehäuses 12 umschlossene Volumenbereich 26, in welchem auch das aus dem Nassraum 16 herausragende Ende der Getriebeeingangswelle 20 liegt, zur Positionierung einer Drehschwingungsdämpfungsanordnung genutzt werden kann. Mit dieser Getriebeglocke 24 schließt das Gehäuse 12 des Automatikgetriebes 10 an ein Antriebsaggregat, also beispielsweise eine Brennkraftmaschine an, so dass letztendlich die Drehschwingungsdämpfungsanordnung im Drehmomentenfluss zwischen dem Antriebsaggregat bzw. der Antriebswelle desselben und dem Automatikgetriebe 10 bzw. der Getriebeeingangswelle 20 desselben liegt bzw. wirksam ist.

Im Folgenden werden mit Bezug auf die Fig. 2 bis 11 verschiedene Ausgestaltungsformen von Drehschwingungsdämpfungsanordnungen beschrieben, die gemäß den Prinzipien der vorliegenden Erfindung in besonders vorteilhafter Weise bei einem Automatikgetriebe 10, wie es in der Fig. 1 dargestellt ist, eingesetzt werden können.

Die in Fig. 2 dargestellte Drehschwingungsdämpfungsanordnung 28 umfasst ein Gehäuse 30, welches antriebsseitig an eine Antriebswelle 32, beispielsweise die Kurbelwelle einer nur schematisch angedeuteten Brennkraftmaschine 34, angekoppelt bzw. ankoppelbar ist. Durch diese Kopplung ist das Gehäuse 30 zusammen mit dieser Antriebswelle 32 um eine Drehachse A drehbar, welche z. B. auch der Drehachse der Getriebeeingangswelle 20 entspricht.

An der dem Automatikgetriebe 10 zugewandten Seite weist das Gehäuse 30 eine beispielsweise durch die in Fig. 1 dargestellte Zwischenplatte 14 hindurch greifende und eine im Nassraum 16 angeordnete Fluid- bzw. Getriebeölpumpe antreibende Pumpenantriebsnabe 36 auf. Durch Rotation des Gehäuses 30 kann somit, ähnlich wie auch bei einem hydrodynamischen Drehmomentwandler, diese getriebeinterne Fluidpumpe aktiviert werden, und es kann Fluid durch einen beispielsweise zwischen der Getriebeeingangswelle 20 und der Pumpenantriebsnabe 36 gebildeten Zwischenraum 38 hindurch in den Innenraum 40 des Gehäuses 30 gefördert bzw. daraus auch wieder abgezogen werden. Es ist dann beispielsweise nicht erforderlich, zur Versorgung des Innenraums 40 Bohrungen in der Getriebeeingangswelle 20 vorzusehen, wie dies beispielsweise bei einem hydrodynamischen Drehmomentwandler der Fall ist. Auch ist das Vorsehen einer Stützhohlwelle, wie sie beispielsweise für ein Leitrad eines hydrodynamischen Drehmomentwandlers vorgesehen ist, nicht erforderlich. Die dynamische Abdichtung zwischen dem Nassraum 16 und dem von der Getriebeglocke 24 umschlossenen Volumenbereich bzw. Innenraum 26 erfolgt durch ein Dichtungssystem 42, das zwischen der Getriebeeingangswelle 20 und der Zwischenplatte 14 sowie der Zwischenplatte 14 und der Pumpenantriebsnabe 36 wirksam ist.

Die Drehschwingungsdämpfungsanordnung 28 umfasst im Innenraum 40 des Gehäuses 30 ein Abtriebsorgan 44, welches zur gemeinsamen Drehung mit der Getriebeeingangswelle 20 mit dieser gekoppelt oder koppelbar ist, beispielsweise durch Verzahnungseingriff. Zwischen dem Gehäuse 30 und dem Abtriebsorgan 44 existieren zwei Drehmomentübertragungswege 46, 48, die im Bereich einer Kopplungsanordnung 50 vor dem als Abtriebsnabe ausgebildeten Abtriebsorgan 44 in einer Kopplungsanordnung 50 zusammengeführt werden und in einem Eingangsbereich 52 aufgezweigt sind. Der Eingangsbereich 52 ist an das Gehäuse 30 fest angekoppelt, so dass der Drehmomentenfluss vom Gehäuse 30 in den Eingangsbereich nicht unterbrechbar ist.

Im Eingangsbereich 52 zweigen sich die beiden Drehmomentübertragungswege 46, 48 auf. Der erste Drehmomentübertragungsweg 46 davon umfasst eine Phasenschieberanordnung 56, welche bewirkt, dass das über diesen ersten Drehmomentübertagungsweg 46 geleitete Drehmoment eine Phasenverschiebung bezüglich des über den zweiten Drehmomentübertragungsweg 48 geleiteten Drehmoments erfährt.

Die Phasenschieberanordnung 56 umfasst einen Torsionsschwingungsdämpfer 58 mit einer Primärseite 60, einer Sekundärseite 62 und einer einer Relativdrehung zwischen der Primärseite 60 und der Sekundärseite 62 entgegenwirkenden Federeinheit 64. Es sei hier darauf hingewiesen, dass der Torsionsschwingungsdämpfer 58 von herkömmlichem Aufbau sein kann und beispielsweise als Primärseite eine Nabenscheibe und als Sekundärseite zwei beidseits davon liegende und miteinander fest verbundene Deckscheibenelemente umfassen kann. Die Federeinheit 64 kann mehrere in Umfangsrichtung aufeinander folgende Federn, vorzugsweise Schraubendruckfedern, umfassen, die sich an der Primärseite 60 und der Sekundärseite 62 abstützend eine Rückstellkraft derselben bezüglich einander in Richtung zu einer Neutralrelativdrehlage bewirken. Der Torsionsschwingungsdämpfer 58 stellt also in dem in Fig. 1 dargestellten Ausgestaltungsbeispiel im Wesentlichen ein Schwingungssystem 66 bereit, welches im ersten Drehmomentübertragungsweg 46 zu einer Phasenverschiebung von darüber übertragenen Drehungleichförmigkeiten bzw. Drehmomentschwingungen führt. Dieses Schwingungssystem 66, weist bedingt durch die an der Primärseite 66 und der Sekundärseite 62 vorhandenen Massen, und die durch die Federeinheit 64 des Torsionsschwingungsdämpfers 58, welcher hier die Federanordnung des Schwingungssystems 66 bereitstellt, eine Eigenfrequenz bzw. Resonanzfrequenz auf. Bei Schwingungsanregungen unter dieser Eigenfrequenz werden zu übertragende Schwingungen im Wesentlichen ohne Phasenverschiebung übertragen. Wird die Resonanzfrequenz überschritten, tritt ein Phasensprung auf, der im Idealfalle und maximal 180° betragen kann, so dass anregende und weitergeleitete Schwingung zueinander gegenphasig verlaufen.

In der Kopplungsanordnung 50 werden die über die beiden Drehmomentübertragungswege 46, 48 geleiteten Drehmomente bzw. Drehmomentanteile wieder zusammengeführt. Hierzu ist die Kopplungsanordnung 50 als Planetengetriebeanordnung 68 ausgebildet und umfasst einen an den ersten Drehmomentübertragungsweg 48 angekoppelten Planetenradträger 70. Dieser trägt in Umfangsrichtung verteilt mehrere Planetenräder 72. Diese weisen zwei zueinander axial versetzt liegende Verzahnungen 74, 76 auf, die in dem in Fig. 1 dargestellten Ausgestaltungsbeispiel zueinander unterschiedliche Durchmesser bezogen auf die Rotationsachsen der Planetenräder 72 am Planetenradträger 70 aufweisen.

Ein erstes Hohlrad 78 ist mit der Sekundärseite 62 des Torsionsschwingungsdämpfers 58 bzw. des Schwingungssystems 66 verbunden und steht in Kämmeingriff mit den Verzahnungen 74 der Planetenräder 72. Ein zweites Hohlrad 80, welches im Wesentlichen auch einen Ausgangsbereich 82 der Drehschwingungsdämpfungsanordnung 46 bereitstellt, ist in Verzahnungseingriff mit den Verzahnungen 76 der Planetenräder 72. Das zweite Hohlrad 80 ist an das Abtriebsorgan 44 fest angebunden, so dass auch im Ausgangsbereich 82, also zwischen der Kopplungsanordnung 50 und dem Abtriebsorgan 44 der Drehmomentenfluss nicht wahlweise unterbrechbar bzw. herstellbar, sondern permanent eingerichtet ist. Dies gilt auch für den zwischen der Aufzweigung im Eingangsbereich 52 und der Zusammenführung der beiden Drehmomentübertragungswege 46, 48 im Bereich der Kopplungsanordnung 50 liegenden Bereich der Drehschwingungsdämpfungsanordnung 28. Die Sekundärseite 62 bzw. das damit gekoppelte Hohlrad 78 kann beispielsweise über eine Lagerung 86 am Ausgangsbereich 82 gelagert sein.

Die Planetengetriebeanordnung 68 bewirkt durch Zusammenwirkung der auf dem Planetenradträger 70 grundsätzlich frei drehbar getragenen Planetenräder 72 mit den beiden Hohlrädern 78, 80 eine Zusammenführung der über die beiden Drehmomentübertragungswege 46, 48 geleiteten Drehmomente. Enthalten diese Drehmomente Schwingungsanteile und ist die Frequenz dieser Schwingungs- bzw. Schwankungsanteile unter der Resonanzfrequenz des Schwingungssystems 66, so werden die beiden Drehmomente bzw. Drehmomentanteile in der Kopplungsanordnung 50 phasengleich zusammengeführt bzw. überlagert. Das in den Ausgangsbereich 82 weitergeleitete Drehmoment entspricht somit auch hinsichtlich seines Schwankungsverlaufs näherungsweise dem im Eingangsbereich 52 von der Überbrückungskupplung 54 aufgenommenen Drehmoment.

Liegt die Frequenz der Schwingungsanteile jedoch über der Resonanzfrequenz des Schwingungssystems 66, hier also des Torsionsschwingungsdämpfers 58, so überlagern sich die beiden über die Drehmomentübertragungswege 46, 48 geleiteten Drehmomente mit ihren Schwingungsanteilen in der Kopplungsanordnung 50 destruktiv. Im Idealfalle, also bei einer Phasenverschiebung von 180°, kann hier eine vollständige Auslöschung der Schwingungsanteile erreicht werden, so dass das am Ausgangsbereich 82 aufgenommene Drehmoment einen im Wesentlichen geglätteten, zumindest aber deutlich schwingungsreduzierten Verlauf aufweist.

Um das Dämpfungsverhalten der Drehschwingungsdämfpungsanordnung 42 weiter beeinflussen zu können, kann beispielsweise der Sekundärseite 62 eine Zusatzmasse 84 zugeordnet sein, um somit die sekundärseitige Masse zu erhöhen und damit einen Einfluss auf die Resonanzfrequenz zu nehmen. Ferner kann dem Schwingungssystem 66 eine allgemein mit 85 bezeichnete Reibungsdämpfungsanordnung zugeordnet sein, die beispielsweise parallel zu der Federeinheit 64 zwischen der Primärseite 60 und der Sekundärseite 62 wirken kann und als Coulombsche Reibeinrichtung oder als Fluidreibeinrichtung ausgebildet sein kann. Das Bereitstellen einer derartigen parallel zur Federeinheit 64 wirksamen Reibungsdämpfungsanordnung 85 beeinflusst im Wesentlichen auch die Größe der durch Schwingungssystem 66 eingeführten Phasenverschiebung.

Durch die Ausgestaltung des Torsionsschwingungsdämpfers 58, also die Masse an der Primärseite 60, die Masse an der Sekundärseite 62, die Steifigkeit der Federeinheit 64 und die die sekundärseitige Masse unterstützende Zusatzmasse 84, wird im Allgemeinen einen möglichst niedrige Eigenfrequenz des Schwingungssystems 66 angestrebt, um somit bereits bei vergleichsweise niedrigen Schwingungsanregungen, also bereits bei vergleichsweise niedriger Drehzahl, den Übergang in den überkritischen, also mit Phasenverschiebung arbeitenden Betriebszustand zu erlangen.

Dadurch, dass die beiden Verzahnungen 74, 76 zueinander unterschiedliche Durchmesser aufweisen, mithin also auch die beiden Hohlräder 78, 80 zueinander unterschiedliche Hohlräder aufweisen, wird es möglich, einen Einfluss auf die Verteilung der Drehmomente auf die beiden Drehmomentübertragungswege 46, 48 zu nehmen. Je näher die Durchmesser der Hohlräder 78, 80, somit also auch die Durchmesser der Verzahnungen 74, 76 beieinander liegen, desto gleichmäßiger sind die Anteile der über die beiden Drehmomentübertragungswege 46, 48 geleiteten Drehmomente. Bei dem in der Fig. 1 dargestellten Ausgestaltungsbeispiel mit größerem Durchmesser der Verzahnung 74, welche mit dem Hohlrad 78 zusammenwirkt, wird ein Übersetzungsverhältnis erreicht, das unter 1 liegt, bei umgekehrtem Größenverhältnis wird ein Übersetzungsverhältnis erreicht, das über 1 liegt. In ersterem Falle wird das über den ersten Drehmomentübertragungsweg 46 geleitete Drehmoment unter Ausnutzung einer Drehmomentflussumkehr im zweiten Drehmomentübertragungsweg 48 erhöht, und zwar unter Abstützung an der Kopplungsanordnung 50. Auch hierbei wird im Sinne der Erfindung eine destruktive Überlagerung der beiden Drehmomentflüsse in den Drehmomentübertragungswegen genutzt, um am Ausgangsbereich 82 ein im Wesentlichen geglättetes Gesamtdrehmoment zu erhalten. Im zweiteren Falle, also bei größerer Verzahnung 76 und kleinerer Verzahnung 74, teilt sich entsprechend den Größenverhältnissen das am Eingangsbereich 52 eingeleitete Drehmoment so auf, dass in beiden Drehmomentübertragungswegen 46, 48 ein Drehmomentenfluss der gleichen Richtung erfolgt und die beiden in gleicher Richtung geleiteten Drehmomentanteile in der Kopplungseinrichtung 50 einander überlagert werden.

Durch das Bereitstellen der in Fig. 2 erkennbaren Drehschwingungsdämpfungsanordnung 28 als in sich geschlossenes System, also das Bereitstellen eines durch das Gehäuse 30 im Wesentlichen abgekapselten Volumens, wird es möglich, die verschiedenen zur Drehschwingungsdämpfung beitragenden Systembereiche durch das in dem Gehäuse 30 im Betrieb vorhandene Fluid vor übermäßigem Verschleiß zu schützen. Dies betrifft vor allem die Kopplungsanordnung 50 bzw. die Planetengetriebeanordnung 68, in welcher die beiden über die Drehmomentübertragungswege 46, 48 geleiteten Drehmomentenanteile zusammengeführt werden. Auch beeinflusst die Bewegung beispielsweise der Planetengetriebeanordnung 68 bzw. auch des Torsionsschwingungsdämpfers 58 in dem Fluid, welches allgemein als viskoses Medium zu betrachten ist, das Dämpfungsverhalten, da durch die Notwendigkeit, Fluid verdrängen zu müssen, Energie dissipiert wird.

Ein derartiger Aufbau der Drehschwingungsdämpfungsanordnung 28 eignet sich vor allem in Verbindung mit einem Automatikgetriebe, da auf diese Art und Weise die Versorgung des Innenraums 40 mit Fluid sichergestellt werden kann. Dabei kann vorgesehen sein, dass im Gehäuse 12 des Automatikgetriebes 10, insbesondere auch im Nassraum 16, ein Getriebesteuergerät vorhanden ist, welches verschiedene Ventile ansteuern kann, um den Strömungsweg zum Innenraum 40 des Gehäuses 30 freizugeben bzw. zu unterbrechen. Das Fluid wird dabei durch die vermittels des Gehäuses 30 selbst angetriebene Pumpe aus dem Fluidsumpf im Gehäuse 12 abgezogen und dorthin auch wieder zurückgeführt.

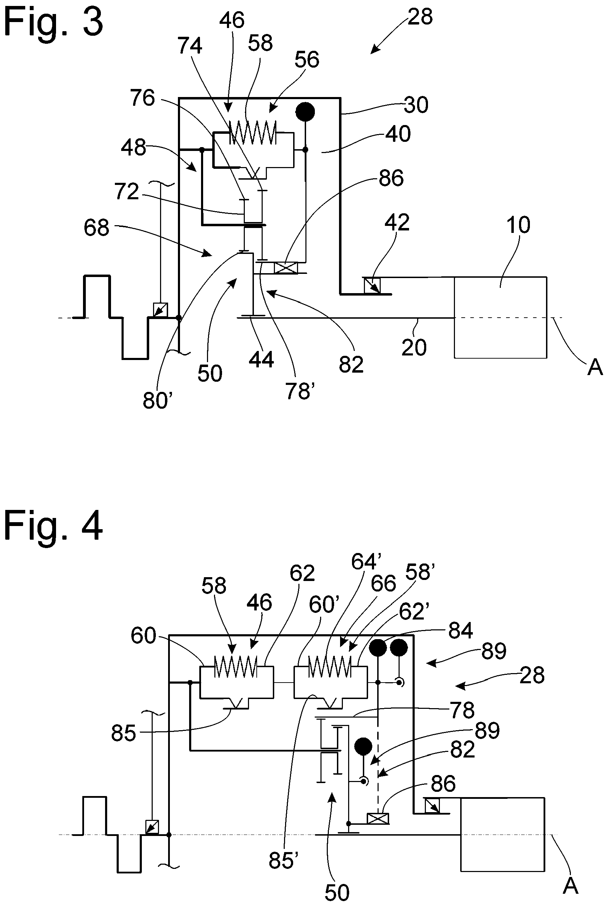

In Fig. 3 ist eine abgewandelte Ausgestaltungsform gezeigt, bei welcher die Planetengetriebeanordnung 68, also die Kopplungsanordnung 50, zur Zusammenwirkung mit den beiden Verzahnungen 74, 76 gestuft ausgebildeten Planetenrädern 72 jeweils ein Sonnenrad 78' und ein Sonnenrad 80' umfasst. Diese nunmehr radial innerhalb der in Umfangsrichtung um die Drehachse A verteilt liegenden Planetenräder 72 angeordneten Sonnenräder 78', 80' führen zur Überlagerung der in den beiden Drehmomentübertragungswegen 46, 48 geleiteten Drehmomentenanteile und zur Weiterleitung des durch Überlagerung erreichten Gesamtdrehmoments in den Ausgangsbereich 82 bzw. zum Abtriebsorgan 44.

Bei der in Fig. 4 dargestellten Ausgestaltungsform umfasst das Schwingungssystem 66 zwei hier seriell geschaltete Torsionsschwingungsdämpfer 58, 58'. Der Torsionsschwingungsdämpfer 58 bildet mit seiner Primärseite 60 im Wesentlichen auch die Primärseite 60 des Schwingungssystems 66. Seine Sekundärseite 62 ist mit der Primärseite 60' des zweiten Torsionsschwingungsdämpfers 58' verbunden. Dessen Sekundärseite 62' bildet im Wesentlichen auch die Sekundärseite des Schwingungssystems 66 und ist mit dem Hohlrad 78 bzw. auch der zusätzlichen Schwungmasse 84 gekoppelt. Ebenso wie bei dem Torsionsschwingungsdämpfer 58 kann auch bei dem Torsionsschwingungsdämpfer 58' eine parallel zu dessen Federeinheit 64' wirkende Reibungsdämpfungsanordnung 85' vorgesehen sein.

Es sei hier darauf hingewiesen, dass selbstverständlich die beiden Torsionsschwingungsdämpfer 58 und 58' hier auch parallel wirksam sein könnten. Zu diesem Zwecke sind die beiden Primärseiten 60 und 60' miteinander fest zu koppeln, während gleichermaßen auch die Sekundärseite 62 und 62' miteinander zu koppeln sind, so dass die beiden Federeinheiten zueinander parallel wirken können.

Man erkennt bei dieser Ausgestaltungsform, dass an der Sekundärseite 62' des zweiten Torsionsschwingungsdämpfers 58' alternativ oder zusätzlich zur zusätzlichen Schwungmasse 84 eine Schwingungsdämpfungsanordnung 89 vorgesehen ist. Diese kann als drehzahladaptiver Tilger ausgebildet sein mit einer oder mehreren Auslenkungsmassen, die entlang jeweiliger in Umfangsrichtung sich erstreckender Führungsbahnen auslenkbar sind. Diese Führungsbahnen weisen Scheitelbereiche auf, in welchen sie den größten Abstand zur Drehachse A haben. Bei Auslenkung der Auslenkungsmassen aus diesen Scheitelbereichen bewegen sie sich nicht nur in Umfangsrichtung, sondern werden radial nach innen geführt, so dass sie dabei potentielle Energie aufnehmen. Durch die Geometrie dieser Führungsbahnen und die Auswahl der Massen der Auslenkungsmassen wird es möglich, eine Abstimmung auf eine anregende Schwingung bzw. höhere Ordnungen, beispielsweise die Zündfrequenz, zu erreichen. Alternativ wäre es auch möglich, eine derartige Schwingungsdämpfungsanordnung 89 als Festfrequenztilger zu gestalten. Hierzu können eine oder mehrere Schwungmassen vorgesehen sein. Diese sind entgegen der Rückstellkraft von Federn auslenkbar, so dass durch die Auswahl der Massen einerseits und der Federkonstanten andererseits eine Abstimmung auf eine zu bedämpfende Frequenz vorgesehen sein kann.

Wie die Fig. 4 zeigt, ist es möglich, eine derartige Schwingungsdämfpungsanordnung 89 alternativ oder zusätzlich auch am Ausgangsbereich 82, beispielsweise angekoppelt an das Hohlrad, vorzusehen. Selbstverständlich könnte die in den ersten Drehmomentübertragungsweg 46 integrierte Schwingungsdämpfungsanordnung 89 auch an das Hohlrad 78 angekoppelt sein. Weiter wird darauf hingewiesen, dass derartige drehzahladaptiv wirksame oder als Festfrequenztilger wirksame Schwingungsdämpfungsanordnungen 89 auch bei allen anderen dargestellten Ausgestaltungsformen vorgesehen sein können, und zwar sowohl in Zuordnung zu einem der Drehmomentübertragungswege, als auch in Zuordnung zum Ausgangsbereich.

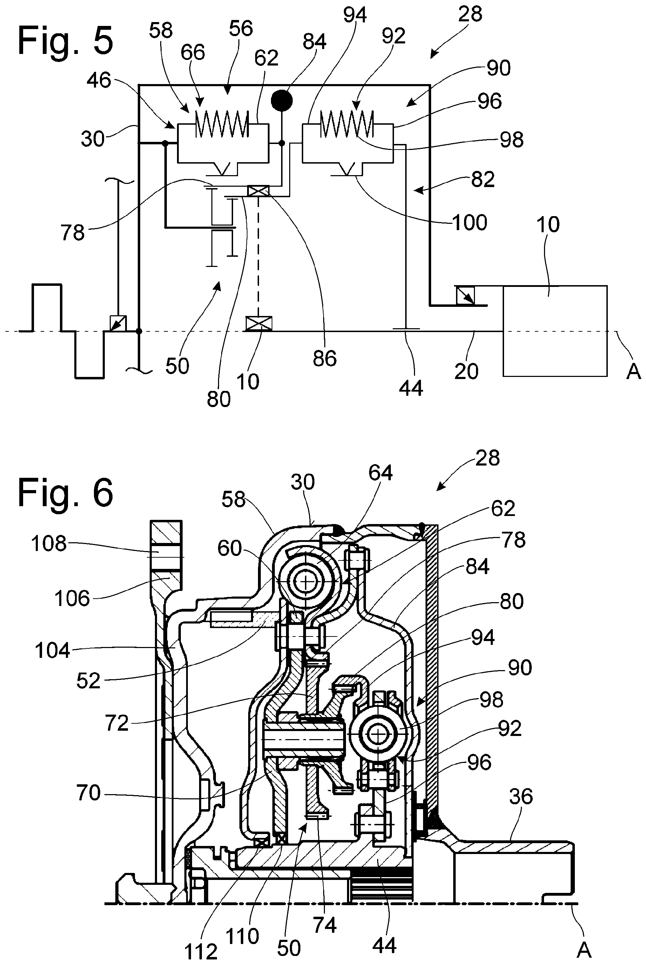

Bei dem in Fig. 5 gezeigten Aufbau ist neben dem im ersten Drehmomentübertragungsweg 46 wirksamen Schwingungssystem 66 der Phasenschieberanordnung 56 ein weiteres Schwingungssystem 90 dem Ausgangsbereich 82 zugeordnet. Das weitere Schwingungssystem 90 liegt also im Drehmomentenfluss zwischen dem Gehäuse 30 und dem Abtriebsorgan 44 folgend auf die Kopplungsanordnung 50. Das weitere Schwingungssystem 90 umfasst einen Torsionsschwingungsdämpfer 92 mit einer Primärseite 94, welche an das ausgangsseitige Hohlrad 80 angekoppelt ist, sowie einer Sekundärseite 96, welche an das Abtriebsorgan 44 angekoppelt ist. Dazwischen wirkt eine Federeinheit 98, so dass die Primärseite 94 und die Sekundärseite 96 bezüglich einander und gegen die Rückstellwirkung der Federn der Federeinheit 92 sich in Umfangsrichtung um die Drehachse A drehen können. Parallel zur Federeinheit 98 kann auch hier wieder eine Reibungsdämpfungsanordnung 100 wirksam sein.

Zwischen der Primärseite 94 dieses weiteren Schwingungssystems 90 bzw. dem damit gekoppelten Hohlrad 80 und der Sekundärseite 62 des Schwingungssystems 66 bzw. dem damit gekoppelten Hohlrad 78 ist eine Lagerung 86 vorgesehen. Ferner kann eine zusätzliche Abstützung bezüglich der Getriebeeingangswelle 20 über eine Lagerung 102 erfolgen.

Ein wesentlicher Vorteil dieser Ausgestaltungsvariante ist, dass zwischen den beiden hier seriell wirksamen Schwingungssystemen 66, 90 durch die Zusatzmasse 84 eine vergleichsweise träge Zwischenmasse zwischen den beiden Schwingungssystemen 66, 90 erreicht wird, was sich hinsichtlich der Schwingungsdämpfungscharakteristik als sehr vorteilhaft erweist. Da über das weitere Schwingungssystem 90 in jedem Falle das gesamt über die Drehschwingungsdämpfungsanordnung 28 geleitete Drehmoment zu übertragen ist, sollte dessen Federeinheit so ausgelegt sein, dass sie dieses Drehmoment im Bereich ihrer Elastizität übertragen kann, also ohne eine Drehblockierung zwischen der Primärseite 94 und der Sekundärseite 96 im gesamten Drehmomentenbereich elastisch wirksam ist.

Es ist selbstverständlich, dass beispielsweise die zusätzliche Schwingungsmasse 84 auch an anderer Position als Zwischenmasse wirksam werden kann. Beispielsweise könnte eine Ankopplung auch an die Primärseite 94 des Torsionsschwingungsdämpfers 92 oder unmittelbar an das Hohlrad 78 erfolgen.

Die Fig. 6 zeigt eine konstruktive Ausgestaltung des in Fig. 5 dargestellten Aufbauprinzips. Man erkennt das Gehäuse 12 der Drehschwingungsdämpfungsanordnung 58, welches aus mehreren Gehäuseteilen bzw. Gehäuseschalen zusammengefügt ist und die Pumpenantriebsnabe 36 zum Eingriff in den Nassraum 16 des Automatikgetriebes 10 aufweist. An einer dem Antriebsaggregat zugewandt zu positionierenden Gehäuseschale 104 ist eine Kopplungseinheit 106 vorgesehen, welche plattenartig oder ringscheibenartig ausgebildet sein kann und mehrere Kopplungsabschnitte 108 beispielsweise zum Anschrauben einer Flexplatte oder dergleichen aufweist, welche wiederum in ihrem radial inneren Bereich dann an die Antriebswelle 32 beispielsweise durch Verschraubung anzubinden ist. Auf diese Art und Weise kann das Gehäuse 12 zur Drehung um die Drehachse A angetrieben werden.

Der Eingangsbereich 52 ist beispielsweise durch Steckverzahnung an das Gehäuse 12 drehfest angekoppelt und in Verbindung mit der beispielsweise durch eine Nabenscheibe bzw. ein Zentralscheibenelement bereitgestellten Primärseite 60 des Torsionsschwingungsdämpfers 58. Dieses Zentralscheibenelement bildet in seinem radial inneren Bereich gleichzeitig auch den Planetenradträger 70, an welchem über entsprechende achsenartige Lagerungsstifte in Umfangsrichtung um die Drehachse verteilt mehrere Planetenräder 72 drehbar getragen sind. Der Planetenradträger 70 ist hier über eine Lagerung 110 auf dem Abtriebsorgan 44 drehbar gelagert. Auch die Sekundärseite 62, welche hier bereitgestellt ist durch zwei Deckscheibenelemente, kann im Bereich von einem, hier dem antriebsseitigen Deckscheibenelement und über eine Lagerung 112 auf dem Abtriebsorgan 44 drehbar gelagert sein. Der Planetenradträger 70 könnte bei dieser Ausgestaltungsform auch direkt an das Gehäuse 30, beispielsweise die dem Antriebsaggregat zugewandte Gehäuseschale 104 angebunden sein. Hierzu können in dem nach radial innen greifenden Deckscheibenelement der Sekundärseite 62 Durchgriffsaussparungen vorgesehen sein, durch welche hindurch entsprechende Befestigungsabschnitte des Planetenradträgers 70 greifen können, um sich bezüglich dieser Sekundärseite 62 in Umfangsrichtung auch bewegen können.

Das andere der beiden Deckscheibenelemente der Sekundärseite 62 bildet in seinem radial inneren Bereich das Hohlrad 78, das mit der Verzahnung 74 mit größerem Durchmesser der Planetenräder 72 zusammenwirkt.

Das weitere Schwingungssystem 90 bzw. dessen Torsionsschwingungsdämpfer 92 bildet mit einem der Deckscheibenelemente der Primärseite 94 desselben das Hohlrad 80. Ein als Sekundärseite 96 wirksames Zentralscheibenelement ist radial innen durch Vernietung oder dergleichen an das Abtriebsorgan 44 angebunden, könnte damit aber auch integral ausgebildet sein.

Die Zusatzmasse 84 umfasst hier zwei ringscheibenartig ausgebildete Masseteile, beispielsweise aus Blechmaterial oder aus Gussmaterial. Eines dieser Teile ist durch Vernietung an die Sekundärseite 62, also die beiden Deckscheibenelemente derselben angebunden und in seinem radial äußeren Bereich durch Vernietung mit dem anderem Teil verbunden. Dieses wiederum ist nach radial innen geführt und beispielsweise axial bezüglich des Gehäuses 12 bzw. auch radial bezüglich des Abtriebsorgans 44 gelagert.

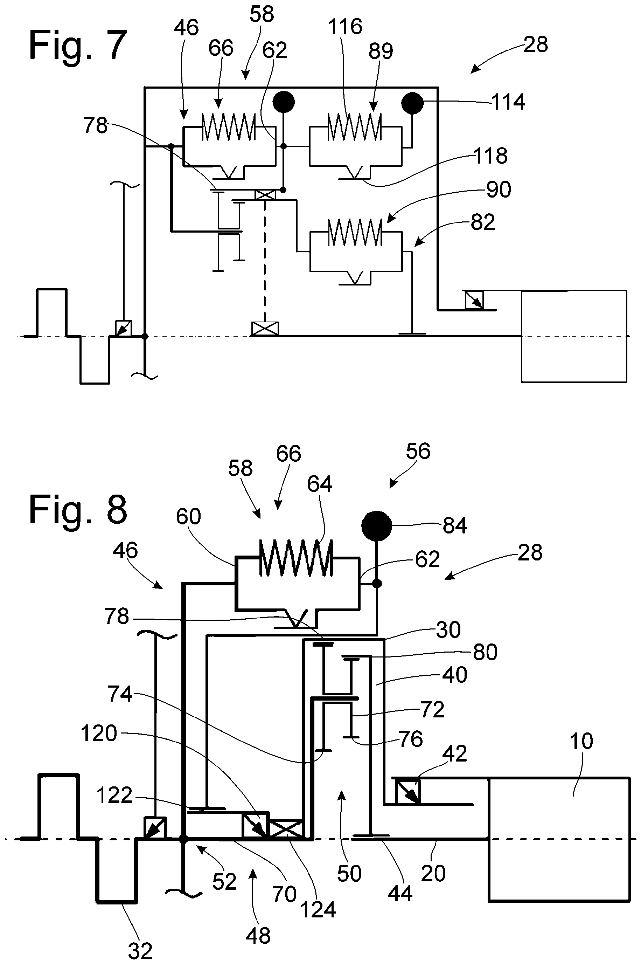

In Fig. 7 ist ein Aufbau gezeigt, welcher in prinzipieller Weise dem vorangehend mit Bezug auf den Fig. 5 beschriebenem Aufbau entspricht. Man erkennt auch hier die beiden Schwingungssysteme 66 und 90, wobei das erstgenannte in den ersten Drehmomentübertragungsweg 46 integriert ist, während das zweitgenannte dem Ausgangsbereich 82 zugeordnet ist. Weiter erkennt man hier den Aufbau einer zusätzlichen Schwingungsdämpfungsanordnung 89 als so genannter Festfrequenztilger. Man erkennt die Masse 114, beispielsweise bereitgestellt durch ein oder mehrere Masseteile. Eine oder mehrere Federn 116 koppeln diese Masse 114 hier an die Sekundärseite 62 des Torsionsschwingungsdämpfers 58 bzw. das Hohlrad 78 an. Parallel zu der oder den Federn 116 kann eine Reibungsdämpfungsanordnung 118 wirksam sein, so dass eine zusätzliche Energieabfuhr realisierbar ist.

Wesentlich ist bei derartigen zusätzlichen Schwingungsdämpfungsanordnungen, dass diese, unabhängig davon, ob als Festfrequenztilger oder als drehzahladaptiver Tilger ausgebildet, nicht im Drehmomentübertragungsweg liegen, sondern im Wesentlichen ohne Drehmomentenbelastung schwingende Massen umfassen.

Bei dem in Fig. 8 dargestellten Ausgestaltungsbeispiel ist das Schwingungssystem 66 und mithin die Phasenschieberanordnung 56 außerhalb des Gehäuses 30 angeordnet. Der Eingangsbereich 52 ist an die Antriebswelle 32 zur gemeinsamen Drehung mit dieser angekoppelt. Der Torsionsschwingungsdämpfer 58 kann beispielsweise so angeordnet sein, dass die Federn seiner Federeinheit 64 das Gehäuse 30 radial umgeben und sich mit diesem axial überlappen.

Der Planetenradträger 70 des zweiten Drehmomentübertragungswegs 48 greift in den Innenraum 40 des Gehäuses 30 ein und ist durch eine Dichtungsanordnung 120 fluiddicht, jedoch drehbar in das Gehäuse 30 hineingeführt. Die drehfeste Kopplung des Gehäuses 30 mit der Sekundärseite 62 des Torsionsschwingungsdämpfers 58 kann beispielsweise durch eine Steckverzahnung 122 erfolgen. Weiterhin kann das Gehäuse 30 auf dem Planetenradträger 70 durch eine Lagerung 124 gelagert sein. Da das Gehäuse 30 über die Lagerung 124 bezüglich des Planetenradträgers 70 gelagert und somit im Wesentlichen definiert radial gehalten ist, ist das Bereitstellen eines im Wesentlichen konstanten Dichtspaltes bei der Dichtungsanordnung 120 gewährleistet.

Der über die Phasenschieberanordnung 56 geleitete Drehmomentenanteil gelangt über die Sekundärseite 62 und die Steckverzahnung 122 in das Gehäuse 30. Dieses bildet entweder selbst das Hohlrad 78 oder ist damit fest verbunden. Durch die Planetenräder 72, die jeweils wiederum die beiden Verzahnungen 74, 76 aufweisen, wird eine Zusammenführung der Drehmomentenanteile erreicht und deren Weiterleitung über das Hohlrad 80 zum Abtriebsorgan 44 und mithin zur Getriebeeingangswelle 20.

Um bei dieser Ausgestaltung eine fluiddichte Kapselung des Innenraums 40 zu gewährleisten, ist die auf kleinerem Radius als die Dichtungsanordnung 42 positionierte Dichtungsanordnung 120 bezüglich der erstgenannten Dichtungsanordnung relativbewegbar. Die Versorgung des Innenraums 40 des Gehäuses 30 mit Fluid erfolgt in der vorangehend bereits beschriebenen Art und Weise. Durch die definierte bzw. gesteuerte Zufuhr von Fluid in den Innenraum 40 wird weiterhin gewährleistet, dass die Dichtflächen der Dichtungsanordnung sowohl im Fahrbetrieb, als auch bei Stillstand weitgehend nicht mit Fluid benetzt sind. Im Stillstand wird das Gehäuse 30 sich so weit entleeren, dass der Füllstand unter der Dichtungsanordnung 120 liegt. Im Fahrzustand wird fliehkraftbedingt das Fluid sich primär nach radial außen verlagern, so dass auch in diesem Zustand eine Benetzung der Dichtungsanordnung 120 im Wesentlichen nicht vorliegen wird.

Bei dieser Ausgestaltungsform wird also die Wirkung des Fluids sowohl hinsichtlich der Verschleißminderung, als auch hinsichtlich einer zusätzlichen Dämpfungskomponente nur im Bereich der Kopplungsanordnung 50 genutzt.

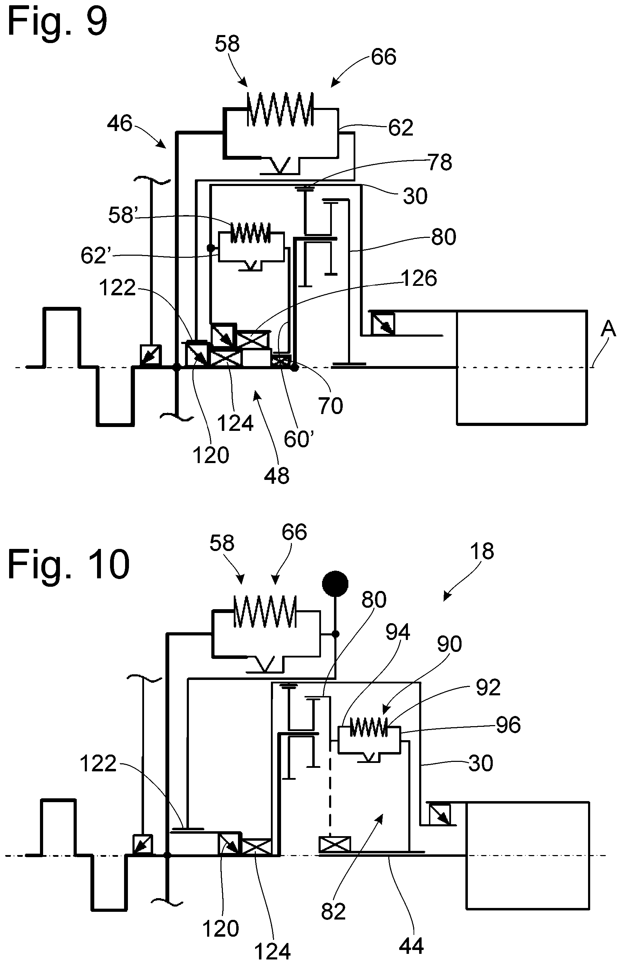

Bei dem in Fig. 9 dargestellten Aufbau umfasst das Schwingungssystem 66 wieder zwei Torsionsschwingungsdämpfer 58, 60, von welchen der erstgenannte in einer der Fig. 8 entsprechenden Art und Weise außerhalb des Gehäuses 30 liegt, während der zweite Torsionsschwingungsdämpfer 58 innerhalb des Gehäuses, gleichwohl jedoch im ersten Drehmomentübertragungsweg 46 liegt. Dazu ist die Sekundärseite 62 des ersten Torsionsschwingungsdämpfers 58 über die vorangehend bereits angesprochene Steckverzahnung 122 nunmehr an die Primärseite 60' des im Gehäuse 30 liegenden Torsionsschwingungsdämpfers 58 angebunden. Dessen Sekundärseite 62' ist an das Gehäuse 30 selbst angekoppelt, welches wiederum das Hohlrad 78 trägt bzw. selbst bereitstellt.

Vermittels der Lagerung 124 ist bei diesem Ausgestaltungsbeispiel die Primärseite 60' des Torsionsschwingungsdämpfers 58' auf dem Planetenradträger 70 und somit dem zweiten Drehmomentübertragungsweg 48 gelagert. Über eine weitere Lagerung 126 ist das Gehäuse 30 auf der Primärseite 60' des Torsionsschwingungsdämpfers 58' gelagert. Hier kann die Primärseite 60' des zweiten Torsionsschwingungsdämpfers 58 als Zwischenwelle ausgebildet sein bzw. an diese angebunden sein.

Auch hier liegt die Dichtungsanordnung 120, durch welche das Gehäuse 30 fluiddicht bezüglich des Planetenradträgers 70 angeschlossen ist, vergleichsweise weit radial innen bezüglich der Drehachse A, so dass unter Berücksichtigung des sich sowohl im Fahrbetrieb als auch im Stillstandzustand einstellenden Füllzustands eine Benetzung von dessen Dichtflächen weitgehend ausgeschlossen werden kann.

In Fig. 10 ist ein Aufbau gezeigt, welcher im Wesentlichen eine Kombination der Ausgestaltungsvariante gemäß Fig. 8 mit der Ausgestatungsvariante gemäß Fig. 5 zeigt. Das Schwingungssystem 66 bzw. dessen Torsionsschwingungsdämpfer 58 ist außerhalb des Gehäuses 30, beispielsweise dieses im Wesentlichen radial außen umgebend angeordnet. Im Ausgangsbereich 82 liegt folgend auf das Hohlrad 80 das weitere Schwingungssystem 90 mit seinem Torsionsschwingungsdämpfer 92. Dessen Sekundärseite ist an das Abtriebsorgan 44 angekoppelt.

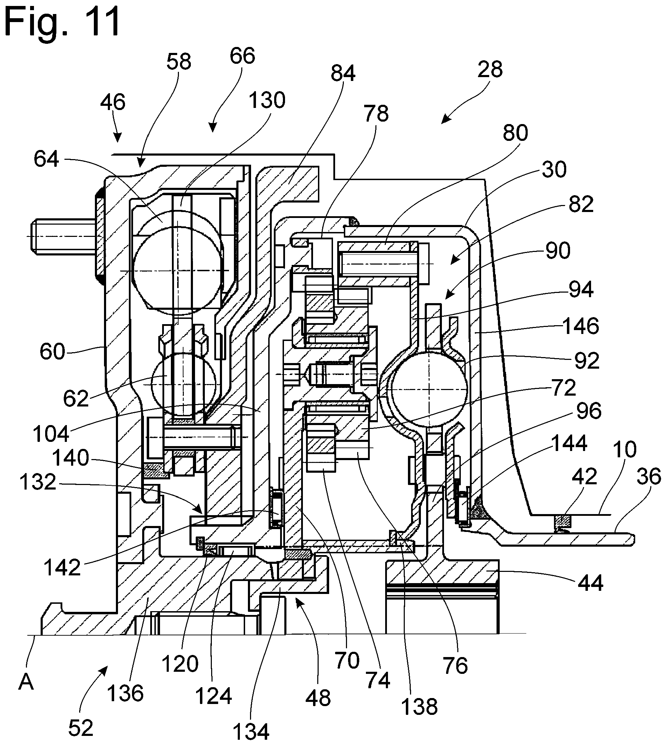

Die Fig. 11 zeigt in einer Teil-Längsschnittdarstellung eine konstruktive Ausführung des mit Bezug auf die Fig. 10 bereits erläuterten Aufbauprinzips. Der Torsionsschwingungsdämpfer 12 bzw. dessen Primärseite 60 ist mit zwei in axialem Abstand zueinander liegenden Deckscheibenelementen ausgebildet. Ein antriebsseitig positioniertes dieser beiden Deckscheibenelemente kann über eine Flexplatte oder dergleichen an eine Antriebswelle, also beispielsweise Kurbelwelle eines Antriebsaggregats, zur gemeinsamen Drehung um die Drehachse A angekoppelt werden.

Der Torsionsschwingungsdämpfer 58 ist hier zweistufig ausgebildet. Eine erste Stufe umfasst die beiden bereits angesprochenen Deckscheibenelemente als Eingangsbereich bzw. Primärseite und ein Zentralscheibenelement 130 als Sekundärseite bzw. Ausgangsbereich. Dieses Zentralscheibenelement 130 ist vermittels eines ersten Federsatzes der Federeinheit 64 bezüglich der beiden Deckscheibenelemente um die Drehachse A drehbar und bildet in seinem radial inneren Bereich gleichzeitig auf den Eingangsbereich bzw. die Primärseite einer radial inneren, zweiten Dämpferstufe. Diese ist zur ersten Dämpferstufe seriell wirksam und umfasst als Ausgangsseite bzw. Sekundärseite, welche gleichzeitig auch die Sekundärseite 62 des Torsionsschwingungsdämpfers 58 bereitstellt, zwei weitere Deckscheibenelemente, die beidseits des Zentralscheibenelements 130 angeordnet sind und beispielsweise durch Verschraubung mit einer hier scheibenartig ausgebildelten Zusatzmasse 84 verbunden sein können. Ein weiterer Federsatz der Federeinheit 64 des Torsionsschwingungsdämpfers 58 wirkt zwischen diesen beiden weiteren Deckscheibenelementen und dem Zentralscheibenelement 130 und ermöglicht somit eine Relativdrehung dieser beiden Systembereiche bezüglich einander.

Radial innen ist die Zusatzmasse 84 mit dem Gehäuse 30 bzw. einer antriebsseitigen Gehäuseschale 104 desselben über Verzahnungen 132 in Drehkopplungseingriff. An dieser Gehäuseschale 104 ist radial außen beispielsweise durch Vernietung das Hohlrad 78 festgelegt, welches in Kämmeingriff mit den Verzahnungen 74 der Planetenräder 72 steht.

Der die Planetenräder 72 tragende Planetenradträger 70 ist radial innen beispielsweise vermittels einer Hirth-Verzahnung und unter Einsatz einer Spannhülse 134 an eine Eingangsnabe 136 angebunden. Diese wiederum ist mit der Primärseite 60 des Torsionsschwingungsdämpfers 58 fest verbunden, so dass im Bereich dieser Antriebsnabe 136 eine Aufzweigung in die beiden Drehmomentübertragungswege 46 und 48 erfolgt.

Das Hohlrad 80, das mit den Verzahnungen 76 der Planetenräder 72 in Kämmeingriff steht, ist an die Primärseite 94 des Torsionsschwingungsdämpfers 90 beispielsweise durch Verschraubung, Vernietung oder in sonstiger Weise fest angebunden. Diese Primärseite 94 umfasst zwei Deckscheibenelemente, welche in axialem Abstand zueinander miteinander fest verbunden sind und zwischen sich ein Zentralscheibenelement der Sekundärseite 96 aufnehmen. Dieses ist an das Abtriebsorgan 44 beispielsweise durch Verschweißung, Vernietung oder dergleichen fest angebunden oder, wie hier dargestellt, integral damit ausgebildet. Über ein beispielsweise zusammen mit dem Planetenradträger 70 an die Antriebsnabe 136 angebundenes, hülsenartiges Lagerungselement 138 ist die Primärseite 94 des Torsionsschwingungsdämpfers 90 radial bezüglich des Planetenradträgers 70 und mithin auch bezüglich der Eingangsnabe 136 abgestützt. Ein Achsversatz zwischen der Drehachse einer antreibenden Welle und der Drehachse einer Abtriebswelle, welche mit dem Abtriebsorgan 44 zu koppeln ist, kann durch die Radialrelativbewegbarkeit der Sekundärseite 96 bezüglich der Primärseite 94 des Torsionsschwingungsdämpfers 90 kompensiert werden.

Eine axiale Lagerung der Sekundärseite 62 des Torsionsschwingungsdämpfers 58, also der in der zweiten Dämpferstufe vorgesehenen Deckscheibenelemente, kann beispielsweise unmittelbar über ein in der Fig. 11 eingezeichnetes Lagerungselement 140 bezüglich der Primärseite 60 des Torsionsschwingungsdämpfers erfolgen. Eine radiale Lagerung der Sekundärseite 62 des Torsionsschwingungsdämpfers 58 kann über den Verzahnungseingriff der Zusatzmasse 84 mit dem Gehäuse 30 und die Lagerung des Gehäuses 30 vermittels des Lagers 124 auf der Eingangsnabe 136 realisiert sein. Der Planetenradträger 70 ist axial bezüglich des Gehäuses 30 durch ein Lager 142 gelagert. In der anderen axialen Richtung ist diese über das Lagerungselement 138 an der Primärseite 94 des Torsionsschwingungsdämpfers 90 abgestützt, die über ein weiteres Axiallager 144 axial bezüglich einer abtriebsseitigen Gehäuseschale 146 abgestützt ist. Antriebsseitig ist das Gehäuse 30 vermittels der dynamischen Dichtungsanordnung 120 auf vergleichsweise kleinerem Radius bezüglich der Eingangsnabe 136 abgedichtet. Auf etwas größerem Radius ist das Gehäuse 30 bzw. die Pumpennabe 36 desselben durch die dynamische Dichtung 42 bezüglich des Getriebes 10 abgedichtet.

Die Einstellung des Schwingungsdämpfungsverhaltens kann bei dieser Ausgestaltungsvariante insbesondere durch die massemäßige Auslegung der Primärseite 60 und der Sekundärseite 62 des Torsionsschwingungsdämpfers 58 und auch die Auswahl der Masse bzw. des Massenträgheitsmoments der Zusatzmasse 84 selbstverständlich in Zusammenwirkung mit der Federsteifigkeit der Federeinheit 64 erfolgen.

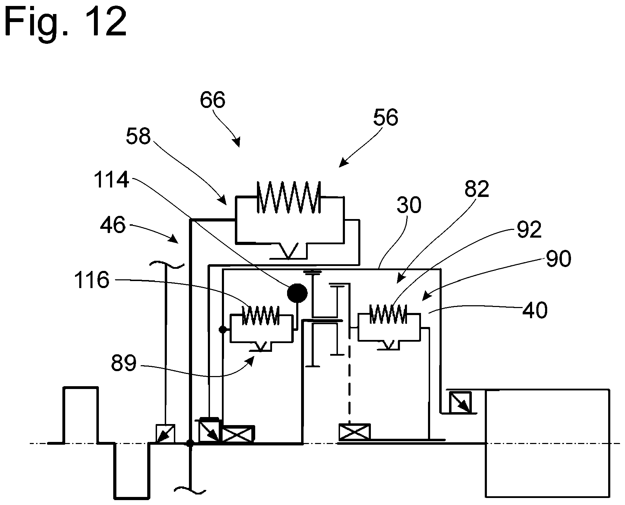

Eine Weiterbildung des in Fig. 10 dargestellten Ausgestaltungsbeispiels ist in Fig. 12 gezeigt. Hier ist zusätzlich in den ersten Drehmomentübertragungsweg 46 eine Schwingungsdämpfungsanordnung 89, hier in Form eines Festfrequenztilgers, wie vorangehend bereits mit Bezug auf die Fig. 7 beschrieben, vorgesehen. Eine Schwungmasse 114 mit einem oder mehreren Masseteilen ist über eine oder mehrere Federn 116, beispielsweise ausgebildet als Schraubendruckfedern oder als Elastomerblöcke, beispielsweise Gummielemente oder dergleichen, an das Gehäuse 30 angebunden und in dessen Innenraum 40 vorgesehen.

Es sei darauf hingewiesen, dass die verschiedenen zur Schwingungsdämpfung beitragenden Aspekte, wie z. B. mehrere seriell oder parallel wirksame Torsionsschwingungsdämpfer bei dem Schwingungssystem 66 oder/und bei dem weiteren Schwingungssystem 90, in Verbindung mit einer oder mehreren zusätzlichen Schwingungsdämpfungsanordnungen bei den vorangehend beschriebenen Ausgestaltungsformen unabhängig davon vorgesehen sein können, ob Teile der zur Schwingungsdämpfung beitragenden Systembereiche innerhalb des Gehäuses 30 oder außerhalb des Gehäuses angeordnet sind. Das heißt, es sind alle vorangehend erläuterten und zur Drehschwingungsdämpfung beitragenden Aspekte beliebig miteinander kombinierbar. Dies trifft gleichermaßen für die Ausgestaltung der Kopplungsanordnung bzw. der Planetengetriebeanordnung derselben zu. Diese kann mit Hohlrädern oder Sonnenrädern bereitgestellt werden. Auch ist es selbstverständlich, dass die in Umfangsrichtung um die Drehachse verteilt liegenden Planetenräder mit den beiden Verzahnungen 74, 76 integral ausgebildet seien können, oder aus jeweils zwei jeweils eine der Verzahnungen bereitstellenden Teilen zusammengefügt sein können.

## Patentansprüche

1. Drehschwingungsdämpfungsanordnung, insbesondere für einen Antriebsstrang mit einem Automatikgetriebe, umfassend einen Eingangsbereich (52) und einen Ausgangsbereich (82), wobei zwischen dem Eingangsbereich (52) und dem Ausgangsbereich (82) ein erster Drehmomentübertragungsweg (46) und parallel dazu ein zweiter Drehmomentübertragungsweg (48) sowie eine Kopplungsanordnung (50) zur Überlagerung der über die Drehmomentübertragungswege (46, 48) geleiteten Drehmomente vorgesehen sind, wobei die Drehschwingungsdämpfungsanordnung ferner wenigstens im ersten Drehmomentübertragungsweg (46) eine Phasenschieberanordnung (56) umfasst zur Erzeugung einer Phasenverschiebung von über den ersten Drehmomentübertragungsweg (46) geleiteten Drehungleichförmigkeiten bezüglich über den zweiten Drehmomentübertragungsweg geleiteten Drehungleichförmigkeiten,
wobei die Kopplungsanordnung (50) eine Planetengetriebeanordnung (68) umfasst,
wobei die Planetengetriebeanordnung (68) einen an den zweiten Drehmomentübertragungsweg (48) angebundenen Planetenradträger (70) mit einer Mehrzahl von daran drehbar getragenen Planetenrädern (72) umfasst,
wobei die Planetengetriebeanordnung (68) eine an den ersten Drehmomentübertragungsweg (46) angebundene erste Koppelradanordnung (78; 78') in Kämmeingriff mit den Planetenrädern (72) und eine an den Ausgangsbereich (82) angebundene zweite Koppelradanordnung (80; 80') in Kämmeingriff mit den Planetenrädern (72) umfasst,
**dadurch gekennzeichnet, dass** die erste Koppelradanordnung (78) und die zweite Koppelradanordnung (80) jeweils eine Hohlradanordnung (78, 80) oder jeweils eine Sonnenradanordnung (78', 80') umfassen.

2. Drehschwingungsdämpfungsanordnung nach Anspruch 1,
**dadurch gekennzeichnet, dass** die Phasenschieberanordnung (56) ein Schwingungssystem (66) mit einer Primärseite (60) und einer gegen die Wirkung einer Federanordnung (64; 64, 64') bezüglich der Primärseite (60) um die Drehachse (A) drehbaren Sekundärseite (62; 62') umfasst.

3. Drehschwingungsdämpfungsanordnung nach Anspruch 1 oder 2,
**dadurch gekennzeichnet, dass** der Ausgangsbereich (82) ein weiteres Schwingungssystem (90) mit einer Primärseite (94) und einer gegen die Wirkung einer Federanordnung (98) bezüglich der Primärseite (94) drehbaren Sekundärseite (96) umfasst.

4. Drehschwingungsdämpfungsanordnung nach einem der Ansprüche 1 bis 3, **dadurch gekennzeichnet, dass** eine um eine Drehachse (A) drehbare, mit Fluid gefüllte oder füllbare und wenigstens die Koppelanordnung (50) umschließende Gehäuseanordnung (30) vorgesehen ist.

5. Drehschwingungsdämpfungsanordnung nach Anspruch 4,
**dadurch gekennzeichnet, dass** die Gehäuseanordnung (30) wenigstens einen Teil der Phasenverschieberanordnung (56) umschließt.

6. Drehschwingungsdämpfungsanordnung nach Anspruch 5,
**dadurch gekennzeichnet, dass** wenigstens ein Teil der Phasenschieberanordnung (56) außerhalb der Gehäuseanordnung (30) angeordnet ist.

7. Drehschwingungsdämpfungsanordnung nach einem der Ansprüche 4 bis 6,
**dadurch gekennzeichnet, dass** der Drehmomentenfluss von der Gehäuseanordnung (30) oder/und dem Eingangsbereich (52) zu einem Abtriebsorgan (44) nicht unterbrechbar ist.

8. Drehschwingungsdämpfungsanordnung nach Anspruch 7,
**dadurch gekennzeichnet, dass** das Abtriebsorgan (44) eine mit einer Abtriebswelle (20), vorzugsweise Getriebeeingangswelle (20), zur gemeinsamen Drehung um die Drehachse (A) gekoppelte oder koppelbare Abtriebsnabe (44) umfasst.

9. Drehschwingungsdämpfungsanordnung nach einem der Ansprüche 4 bis 8,
**dadurch gekennzeichnet, dass** die Gehäuseanordnung (30) eine Antriebsformation (36) zum Antreiben einer Fluidpumpe zum Fördern von Fluid in die Gehäuseanordnung (30) umfasst.

10. Drehschwingungsdämpfungsanordnung nach einem der Ansprüche 1 bis 9,
**dadurch gekennzeichnet, dass** die erste Koppelradanordnung (78; 78') in Verbindung mit den Planetenrädern (72) und die zweite Koppelradanordnung (80; 80') in Verbindung mit den Planetenrädern (72) zueinander gleiche Übersetzungsverhältnisse bereitstellen.

11. Drehschwingungsdämpfungsanordnung nach einem der Ansprüche 1 bis 9,
**dadurch gekennzeichnet, dass** die erste Koppelradanordnung (78; 78') in Verbindung mit den Planetenrädern (72) und die zweite Koppelradanordnung (80; 80') in Verbindung mit den Planetenrädern (72) zueinander unterschiedliche Übersetzungsverhältnisse bereitstellen.

12. Drehschwingungsdämpfungsanordnung nach einem der Ansprüche 2 bis 11 wenn abhängig von Anspruch 2, **dadurch gekennzeichnet, dass** das Schwingungssystem (66) wenigstens zwei zueinander seriell angeordnete Schwingungsdämpfer (58, 58') jeweils mit einer Primärseite (60, 60') und einer bezüglich dieser drehbaren Sekundärseite (62, 62') umfasst.

13. Drehschwingungsdämpfungsanordnung nach einem der Ansprüche 2 bis 12 wenn abhängig von Anspruch 2, **dadurch gekennzeichnet, dass** das Schwingungssystem (66) wenigstens zwei zueinander parallel wirksame Schwingungsdämpfer jeweils mit einer Primärseite und einer bezüglich dieser drehbaren Sekundärseite umfasst.

14. Drehschwingungsdämpfungsanordnung nach einem der Ansprüche 2 bis 13 wenn abhängig von Anspruch 2, **dadurch gekennzeichnet, dass** das Schwingungssystem (66) eine drehzahladaptive Schwingungsdämpfungsanordnung (89) mit wenigstens einer in Umfangsrichtung aus einer Grundlage auslenkbaren und dabei ihren Abstand zur Drehachse (A) verändernde Auslenkungsmasse umfasst.

15. Drehschwingungsdämpfungsanordnung nach einem der Ansprüche 2 bis 14 wenn abhängig von Anspruch 2, **dadurch gekennzeichnet, dass** das Schwingungssystem (66) eine Festfrequenz-Schwingungsdämpfungsanordnung (89) mit wenigstens einer gegen die Wirkung einer Rückstellfederanordnung (116) auslenkbaren Schwingungsmasse (114) umfasst.

16. Drehschwingungsdämpfungsanordnung nach einem der Ansprüche 2 bis 15 wenn abhängig von Anspruch 2, **dadurch gekennzeichnet, dass** dem Schwingungssystem (66) eine einer Relativdrehung zwischen Primärseite (60, 94) und Sekundärseite (62, 96; 62') desselben entgegenwirkende Reibungsdämpfungsanodnung (85, 85', 100) zugeordnet ist.

17. Antriebsstrang für ein Fahrzeug, umfassend ein Automatikgetriebe (10) mit einer Getriebeeingangswelle (20) und einer getriebeinternen Drehmomentenflussunterbrechungsanordnung (18) zur wahlweisen Unterbrechung der Drehmomentübertragungsverbindung zwischen der Getriebeeingangswelle (20) und einer Getriebeausgangswelle (22), ferner umfassend eine Drehschwingungsdämpfungsanordnung (28) nach einem der vorhergehenden Ansprüche, wobei die Ausgangsseite (82) mit der Getriebeeingangswelle (20) zur gemeinsamen Drehung gekoppelt ist.

## Claims

1. Torsional vibration damping arrangement, in particular for a drive train with an automatic transmission, comprising an input region (52) and an output region (82), a first torque transmission path (46) and, parallel thereto, a second torque transmission path (48) and a coupling arrangement (50) for superimposing the torques which are conducted via the torque transmission paths (46, 48) being provided between the input region (52) and the output region (82), the torsional vibration damping arrangement comprising, furthermore, a phase shifter arrangement (56) at least in the first torque transmission path (46) for the generation of a phase shift of rotational non-uniformities which are conducted via the first torque transmission path (46) with regard to rotational non-uniformities which are conducted via the second torque transmission path, the coupling arrangement (50) comprising a planetary transmission arrangement (68), the planetary transmission arrangement (68) comprising a planetary gear carrier (70) which is attached to the second torque transmission path (48) and has a plurality of planetary gears (72) which are carried rotatably on it, the planetary transmission arrangement (68) comprising a first coupling gear arrangement (78; 78') which is attached to the first torque transmission path (46) in meshing engagement with the planetary gears (72), and a second coupling gear arrangement (80; 80') which is attached to the output region (82) in meshing engagement with the planetary gears (72), **characterized in that** the first coupling gear arrangement (78) and the second coupling gear arrangement (80) comprise in each case one internal gear arrangement (78, 80) or in each case one sun gear arrangement (78', 80').

2. Torsional vibration damping arrangement according to Claim 1, **characterized in that** the phase shifter arrangement (56) comprises a vibration system (66) with a primary side (60) and a secondary side (62; 62') which can be rotated about the rotational axis (A) with regard to the primary side (60) counter to the action of a spring arrangement (64; 64, 64').

3. Torsional vibration damping arrangement according to Claim 1 or 2, **characterized in that** the output region (82) comprises a further vibration system (90) with a primary side (94) and a secondary side (96) which can be rotated with regard to the primary side (94) counter to the action of a spring arrangement (98) .

4. Torsional vibration damping arrangement according to one of Claims 1 to 3, **characterized in that** a housing arrangement (30) is provided which can be rotated about a rotational axis (A), is filled or can be filled with fluid, and encloses at least the coupling arrangement (50).

5. Torsional vibration damping arrangement according to Claim 4, **characterized in that** the housing arrangement (30) encloses at least one part of the phase shifter arrangement (56).

6. Torsional vibration damping arrangement according to Claim 5, **characterized in that** at least one part of the phase shifter arrangement (56) is arranged outside the housing arrangement (30).

7. Torsional vibration damping arrangement according to one of Claims 4 to 6, **characterized in that** the torque flow from the housing arrangement (30) and/or the input region (52) to an output member (44) cannot be interrupted.

8. Torsional vibration damping arrangement according to Claim 7, **characterized in that** the output member (44) comprises an output hub (44) which is coupled or can be coupled to an output shaft (20), preferably a transmission input shaft (20), for common rotation about the rotational axis (A).

9. Torsional vibration damping arrangement according to one of Claims 4 to 8, **characterized in that** the housing arrangement (30) comprises a drive formation (36) for driving a fluid pump for conveying fluid into the housing arrangement (30).

10. Torsional vibration damping arrangement according to one of Claims 1 to 9, **characterized in that** the first coupling gear arrangement (78; 78') in conjunction with the planetary gears (72) and the second coupling gear arrangement (80; 80') in conjunction with the planetary gears (72) provide identical transmission ratios to one another.

11. Torsional vibration damping arrangement according to one of Claims 1 to 9, **characterized in that** the first coupling gear arrangement (78; 78') in conjunction with the planetary gears (72) and the second coupling gear arrangement (80; 80') in conjunction with the planetary gears (72) provide different transmission ratios from one another.

12. Torsional vibration damping arrangement according to one of Claims 2 to 11, if dependent on Claim 2, **characterized in that** the vibration system (66) comprises at least two vibration dampers (58, 58') which are arranged in series with one another and in each case have a primary side (60, 60') and a secondary side (62, 62') which can be rotated with regard to the said primary side (60, 60').

13. Torsional vibration damping arrangement according to one of Claims 2 to 12, if dependent on Claim 2, **characterized in that** the vibration system (66) comprises at least two vibration dampers which act in parallel with one another and in each case have a primary side and a secondary side which can be rotated with regard to the said primary side.

14. Torsional vibration damping arrangement according to one of Claims 2 to 13, if dependent on Claim 2, **characterized in that** the vibration system (66) comprises an adaptive-speed vibration damping arrangement (89) with at least one deflection mass which can be deflected in the circumferential direction out of a basic position and in the process changes its spacing from the rotational axis (A).

15. Torsional vibration damping arrangement according to one of Claims 2 to 14, if dependent on Claim 2, **characterized in that** the vibration system (66) comprises a fixed-frequency vibration damping arrangement (89) with at least one vibration mass (114) which can be deflected counter to the action of a restoring spring arrangement (116).

16. Torsional vibration damping arrangement according to one of Claims 2 to 15, if dependent on Claim 2, **characterized in that** the vibration system (66) is assigned a friction damping arrangement (85, 85', 100) which counteracts a relative rotation between the primary side (60, 94) and the secondary side (62, 96; 62') of the said vibration system (66).

17. Drive train for a vehicle, comprising an automatic transmission (10) with a transmission input shaft (20) and a torque flow interruption arrangement (18) which is inside the transmission for the selective interruption of the torque transmission connection between the transmission input shaft (20) and a transmission output shaft (22), comprising, furthermore, a torsional vibration damping arrangement (28) according to one of the preceding claims, the output side (82) being coupled to the transmission input shaft (20) for common rotation.

## Revendications

1. Dispositif d'amortissement de vibrations de torsion, en particulier pour une chaîne cinématique avec une boîte de vitesses automatique, comprenant une zone d'entrée (52) et une zone de sortie (82), dans lequel il est prévu entre la zone d'entrée (52) et la zone de sortie (82) un premier chemin de transmission de couple (46) et parallèlement à celui-ci un second chemin de transmission de couple (48) ainsi qu'un agencement de couplage (50) pour la superposition des couples acheminés par les chemins de transmission de couple (46, 48), dans lequel le dispositif d'amortissement de vibrations de torsion comprend en outre au moins dans le premier chemin de transmission de couple (46) un agencement de déphasage (56) pour la production d'un déphasage d'irrégularités de rotation conduites par le premier chemin de transmission de couple (46) par rapport à des irrégularités de rotation conduites par le second chemin de transmission de couple,
dans lequel l'agencement de couplage (50) comprend un agencement d'engrenage planétaire (68),
dans lequel l'agencement d'engrenage planétaire (68) comprend un porte-satellites (70) relié au second chemin de transmission de couple (48) avec une multiplicité de roues planétaires (72) portées de façon rotative sur celui-ci,
dans lequel l'agencement d'engrenage planétaire (68) comprend un premier agencement de roue de couplage (78; 78') relié au premier chemin de transmission de couple (46) en engagement d'engrènement avec les roues planétaires (72) et un second agencement de roue de couplage (80; 80') relié à la zone de sortie (82) en engagement d'engrènement avec les roues planétaires (72),
**caractérisé en ce que** le premier agencement de roue de couplage (78) et le second agencement de roue de couplage (80) comprennent chacun un agencement de couronne dentée (78, 80) ou chacun un agencement de roue solaire (78', 80').

2. Dispositif d'amortissement de vibrations de torsion selon la revendication 1, **caractérisé en ce que** l'agencement de déphasage (56) comprend un système vibratoire (66) avec un côté primaire (60) et un côté secondaire (62; 62') pouvant tourner par rapport au côté primaire (60) autour de l'axe de rotation (A) contre l'action d'un agencement de ressorts (64; 64, 64').

3. Dispositif d'amortissement de vibrations de torsion selon une revendication 1 ou 2, **caractérisé en ce que** la zone de sortie (82) comprend un autre système vibratoire (90) avec un côté primaire (94) et un côté secondaire (96) pouvant tourner par rapport au côté primaire (94) contre l'action d'un agencement de ressorts (98) .

4. Dispositif d'amortissement de vibrations de torsion selon l'une quelconque des revendications 1 à 3, **caractérisé en ce qu'**il est prévu un agencement de boîtier (30) pouvant tourner autour d'un axe de rotation (A), rempli ou pouvant être rempli de fluide et entourant au moins l'agencement de couplage (50).

5. Dispositif d'amortissement de vibrations de torsion selon la revendication 4, **caractérisé en ce que** l'agencement de boîtier (30) entoure au moins une partie de l'agencement de déphasage (56).

6. Dispositif d'amortissement de vibrations de torsion selon la revendication 5, **caractérisé en ce qu'**au moins une partie de l'agencement de déphasage (56) est disposée à l'extérieur de l'agencement de boîtier (30).

7. Dispositif d'amortissement de vibrations de torsion selon l'une quelconque des revendications 4 à 6, **caractérisé en ce que** le flux de couple venant de l'agencement de boîtier (30) et/ou de la zone d'entrée (52) vers un organe de sortie (44) ne peut pas être interrompu.

8. Dispositif d'amortissement de vibrations de torsion selon la revendication 7, **caractérisé en ce que** l'organe de sortie (44) comprend un moyeu de sortie (44) couplé ou pouvant être couplé à un arbre de sortie (20), de préférence un arbre d'entrée de boîte de vitesses (20), pour une rotation commune autour de l'axe de rotation (A).

9. Dispositif d'amortissement de vibrations de torsion selon l'une quelconque des revendications 4 à 8, **caractérisé en ce que** l'agencement de boîtier (30) comprend une formation d'entraînement (36) pour l'entraînement d'une pompe à fluide pour transporter du fluide dans l'agencement de boîtier (30).

10. Dispositif d'amortissement de vibrations de torsion selon l'une quelconque des revendications 1 à 9, **caractérisé en ce que** le premier agencement de roue de couplage (78; 78') en liaison avec les roues planétaires (72) et le second agencement de roue de couplage (80; 80') en liaison avec les roues planétaires (72) fournissent des rapports de transmission égaux l'un à l'autre.

11. Dispositif d'amortissement de vibrations de torsion selon l'une quelconque des revendications 1 à 9, **caractérisé en ce que** le premier agencement de roue de couplage (78; 78') en liaison avec les roues planétaires (72) et le second agencement de roue de couplage (80; 80') en liaison avec les roues planétaires (72) fournissent des rapports de transmission différents l'un de l'autre.

12. Dispositif d'amortissement de vibrations de torsion selon l'une quelconque des revendications 2 à 11, lorsqu'elle dépend de la revendication 2, **caractérisé en ce que** le système vibratoire (66) comprend au moins deux amortisseurs de vibrations (58, 58') disposés en série l'un par rapport à l'autre comportant chacun un côté primaire (60, 60') et un côté secondaire (62, 62') pouvant tourner par rapport à celui-ci.

13. Dispositif d'amortissement de vibrations de torsion selon l'une quelconque des revendications 2 à 12, lorsqu'elle dépend de la revendication 2, **caractérisé en ce que** le système vibratoire (66) comprend au moins deux amortisseurs de vibrations actifs parallèlement l'un à l'autre comportant chacun un côté primaire et un côté secondaire pouvant tourner par rapport à celui-ci.

14. Dispositif d'amortissement de vibrations de torsion selon l'une quelconque des revendications 2 à 13, lorsqu'elle dépend de la revendication 2, **caractérisé en ce que** le système vibratoire (66) comprend un dispositif d'amortissement de vibrations (89) adaptable au nombre de tours avec au moins une masse de déviation pouvant se déplacer en direction périphérique à partir d'une position de base et modifiant ainsi sa distance à l'axe de rotation (A).

15. Dispositif d'amortissement de vibrations de torsion selon l'une quelconque des revendications 2 à 14, lorsqu'elle dépend de la revendication 2, **caractérisé en ce que** le système vibratoire (66) comprend un dispositif d'amortissement de vibrations à fréquence fixe (89) avec au moins une masse vibrante (114) déplaçable contre l'action d'un agencement de ressort de rappel (116).

16. Dispositif d'amortissement de vibrations de torsion selon l'une quelconque des revendications 2 à 15, lorsqu'elle dépend de la revendication 2, **caractérisé en ce qu'**un agencement d'amortissement par frottement (85, 85', 100) s'opposant à une rotation relative entre le côté primaire (60, 94) et le côté secondaire (62, 96; 62') du système vibratoire (66) est associé à ce dernier.

17. Chaîne cinématique pour un véhicule, comprenant une boîte de vitesses automatique (10) avec un arbre d'entrée de boîte de vitesses (20) et un agencement d'interruption du flux de couple (18) interne à la boîte de vitesses pour l'interruption choisie de la liaison de transmission de couple entre l'arbre d'entrée de boîte de vitesses (20) et un arbre de sortie de boîte de vitesses (22), comprenant en outre un dispositif d'amortissement de vibrations de torsion (28) selon l'une quelconque des revendications précédentes, dans lequel le côté de sortie (82) est couplé avec l'arbre d'entrée de boîte de vitesses (20) pour une rotation commune.
